# EUROPEAN PATENT APPLICATION

(11) **EP 0 719 628 A2**
(43) Date of publication of application: **03.07.1996**
(21) Application number: 95303947.6
(22) Date of filing: 08.06.1995
(51) Int. Cl.: B29C 45/14

(54) **Method and apparatus for manufacturing molded articles**

(30) Priority: 27.12.1994 JP 325464/94
(71) Applicant: NGK INSULATORS, LTD., Nagoya City Aichi Pref. (JP)
(72) Inventor: Kashiwagi, Hiroshi, Nagoya City, Aichi Pref. (JP)
(74) Representative: Paget, Hugh Charles Edward

(57) **Abstract**

Method and apparatus for manufacturing an elongate composite insulator with a satisfactory dimensional accuracy. A core rod (c) composed of a fiber-reinforced plastics is arranged within a mold cavity (18), and an unvulcanized polymeric material is injected into the cavity to integrally mold a sheath (s) which covers the core rod (c) over substantially the entire length thereof and a plurality of sheds (s) which are spaced from each other in the axial direction of the core rod. The polymeric material is injected into the cavity from a gate (20a,20b), with an injection pressure which acts in a first radial direction perpendicular to the center axis on a mold parting plane. The core rod (c) during injection of the polymeric material is supported from a second radial direction which is perpendicular to the center axis of the core rod and the first radial direction. The deflection of the core rod during the injection of the polymeric material is thereby minimized to realize a satisfactory dimensional accuracy of the product.

## Description

### BACKGROUND OF THE INVENTION

### 1. Field of the Invention

The present invention relates to method and apparatus for manufacturing molded articles which can be obtained by performing an injection molding of a polymeric material to form a molded portion of a predetermined shape on an outer periphery of a core rod.

More particularly, the present invention is to provide a technology which is suitable for manufacturing an elongate composite insulator with a highly improved dimensional accuracy, by integrally molding a sheath to cover the core rod over substantially the entire length thereof and a plurality of sheds which are arranged on the sheath and spaced from each other in the axial direction of the core rod.

### 2. Description of the Related Art

There is known a composite insulator which can be obtained by integrally providing an elongate core rod of fiber-reinforced plastics (FRP) with a sheath and sheds by an injection molding of an appropriate insulating polymeric material such as silicone rubber, ethylene propylene copolymer (EPM), ethylene propylene diene copolymer (EPDM), polyurethane, etc. Such a composite insulator has been actually put into practical applications, particularly in any use environment which can draw out various functional advantages of the composite insulator. As for the injection molding method for manufacturing such composite insulators, various improvements have been conventionally proposed. For example, some proposals deal with a specific problem of insufficient dimensional accuracy of the product due to the deformation of the FRP core rod. Such a problem is significant particularly when the sheath and the sheds are molded on the FRP core rod with an insulating polymeric material in accordance with the so-called transfer molding process, because the mold must be maintained in a heated condition when injecting an unvulcanized material into the cavity. In this instance, the FRP core rod which is relatively hard in an ordinary temperature condition undergoes a softening and tends to be readily deformed under the heated condition.

A method for manufacturing an elongate composite insulator is disclosed in PCT/FR84/00077, for example, wherein an unvulcanized polymeric material is injected into a mold cavity between the inner surface of a mold and the outer peripheral surface of an elongate core rod. The disclosed method aims at improvement in the dimensional accuracy of the composite insulator, which is more or less achieved by preventing occurrence of degraded uniformity in thickness of the sheath on the outer periphery of the core rod as the core rod is deflected within the mold cavity due to the injection pressure of the polymeric material. In this instance, a gate is arranged within an upper mold portion to enable an injection of the polymeric material from a direction which is substantially perpendicular to the mold parting plane, and a supporting member for the core rod is provided in a lower mold portion so as to support the core rod from a direction opposite to the injection direction and thereby to reduce the deflection of the core rod during the injection of the polymeric material. The supporting member for the core rod is retracted radially outwards from a contact point with the core rod after completion of the injection of the polymeric material from the gate, to allow the vulcanization of the injected polymeric material with the supporting member retracted.

According to such a method, an improved dimensional accuracy of the product may be achieved to some extent, though a number of processing steps are required ranging from the supply of the injection material to the removal of the product. Thus, not only enhanced productivity and cost reduction are difficult to achieve, but also a troublesome maintenance is required for the entire mold system.

To solve these drawbacks, JP-A-63-128916 discloses an arrangement in which the gate and the supporting member for the core rod are arranged in the mold parting plane. As a further improved proposal, JP-A-2-248225 discloses an arrangement in which the gate is arranged in the mold parting plane and a rod as a supporting member for the core rod is inserted into a through hole formed in the upper mold portion or lower mold portion adjacent to the mold parting plane in order to enhance a sealing performance between the upper and lower mold portions and the supporting rod. Furthermore, JP-A-5-177669 discloses an arrangement in which a plurality of gates are arranged in the mold parting plane opposite to each other so that the pressure of the polymeric material injected from these gates into the cavity is balanced to reduce the deflection of the core rod.

The inventors conducted various studies with test samples of the molded product, especially an elongate composite insulator, which were prepared in accordance with the above-mentioned various proposals. As a result, it has been found that the deflection of the core rod could be more or less reduced at the step of the injection molding of the polymeric material, thereby making it possible to maintain a relatively uniform thickness of the sheath on the outer periphery of the core rod. However, it has also been confirmed that still further improvement is required or desirable to realize longer products while maintaining a satisfactory product quality, in particular the dimensional accuracy. For example, when the composite insulators are to be manufactured by a transfer molding process, there is a significant tendency that even a slight deflection of the core rod gives rise to a serious unevenness in the thickness of the sheath.

### SUMMARY OF THE INVENTION

It is therefore an object of the present invention to provide an improved technology for manufacturing molded products, which makes it possible to minimize the deflection of the core rod upon injection of the polymeric material into the mold cavity, and to satisfy the demand for an elongate product while maintaining the satisfactory product quality, in particular the dimensional accuracy.

As a result of thorough investigations, seeking for a solution of the above-mentioned object, the inventors reached the following recognition. First of all, it has been revealed that even when the core rod is supported by a supporting member from a direction opposite to the injection direction of the polymeric material, or even when the polymeric material is injected into the cavity from a plurality of gates to balance the injection pressure, the core rod in its cross section still exhibits a tendency to slightly deflect not only in the injection direction, but also in a direction which is perpendicular to the injection direction. It has been further found highly effective to support the core rod from the direction perpendicular to the injection direction of the polymeric material, in order to minimize the deflection of the core rod upon injection molding of the polymeric material.

Based on these recognitions, the present invention in its first aspect provides an improved method for manufacturing molded articles, wherein a core rod is arranged in a cavity of a mold and a polymeric material is injected into the cavity so that a molded portion having a predetermined shape is formed on an outer periphery of the core rod.

The method according to the first aspect of the present invention comprises the steps of: injecting the polymeric material from a gate into the cavity with an injection pressure which acts in a first radial direction which is perpendicular to a center axis of the core rod on a mold parting plane; and suppressing a deflection of the core rod within the cavity during the injection of the polymeric material, by supporting the core rod from a second radial direction which is perpendicular to both the center axis of the core rod and the first radial direction, and curing the injected polymeric material within the cavity.

According to a second aspect of the present invention, there is provided an improved method for manufacturing elongate composite insulators, wherein an elongate core rod comprising a fiber-reinforced plastics is arranged in a cavity of a mold, and an insulating polymeric material, such as silicone rubber, EPM, EPDM, polyurethane, etc., is injected into the cavity to integrally form a sheath which covers an outer periphery of the core rod over substantially an entire length thereof and a plurality of sheds which are spaced from each other in an axial direction of the core rod.

The method according to the second aspect of the present invention comprises the steps of injecting an unvulcanized polymeric material from a gate into the cavity with an injection pressure which acts in a first radial direction which is perpendicular to a center axis of the core rod on a mold parting plane, and suppressing a deflection of the core rod within the cavity during the injection of the polymeric material, by supporting the core rod from a second radial direction which is perpendicular to both the center axis of the core rod and said first radial direction, and vulcanizing the injected polymeric material within the cavity.

According to a third aspect of the present invention, there is provided an improved apparatus for manufacturing molded articles, wherein a core rod is arranged in a cavity of a mold and a polymeric material is injected into the cavity so that a molded portion having a predetermined shape is formed on an outer periphery of the core rod.

The apparatus according to the third aspect of the present invention comprises a gate for injecting the polymeric material into the cavity with an injection pressure which acts in a first direction perpendicular to the center axis of the core rod on a mold parting plane, and a suppression means for suppressing a deflection of the core rod within the cavity during the injection of the polymeric material, said suppression means including a support means for supporting the core rod from a second radial direction perpendicular to both the center axis of the core rod and the first radial direction.

With the method and apparatus according to the present invention, when injecting the polymeric material into the mold cavity from the gate which opens in the first radial direction perpendicular to the center axis of the core rod in the mold parting plane, with the core rod arranged within the metal mold cavity, the core rod is supported from the second radial direction which is perpendicular to the center axis of the core rod and also to the first radial direction. It is thus possible to minimize the deflection of the core rod within the cavity at the step of injecting the polymeric material and to establish a technology which can securely cope with realization of an elongate products while maintaining the product quality such as a satisfactory dimensional accuracy.

### BRIEF DESCRIPTION OF THE DRAWINGS

The present invention will be explained in further detail hereinafter, with reference to certain preferred embodiments shown in the accompanying drawings, in which:
Fig. 1 is a longitudinal sectional view of the molding machine according to one embodiment of the present invention, which is taken along a horizontal plane;
Fig. 2 is a cross sectional view of the molding machine of Fig. 1, which is taken along a vertical plane to show the gates which are arranged in a metal mold parting plane opposite to each other;
Fig. 3 is a cross sectional view of the molding machine of Fig. 1, which is taken along a vertical plane different from that of Fig. 2 in order to show the supporting members by which the core rod is supported from a direction perpendicular to the mold parting plane;
Fig. 4 is an explanatory view showing the injection state of the polymeric material in the molding machine according to the embodiment of Fig. 1;
Fig. 5 is a fragmentary cross sectional view showing the mold opening state of the molding machine according to the embodiment of Fig. 1;
Fig. 6 is a cross sectional view of the molding machine according to another embodiment of the present invention, of which the right and left halves correspond to respective vertical planes which are different from each other; and
Fig. 7 is a cross sectional view similar to Fig. 2, showing a variation of the molding machine according to the embodiment of Fig. 1.

### DETAILED DESCRIPTION OF THE PREFERRED EMBODIMENTS

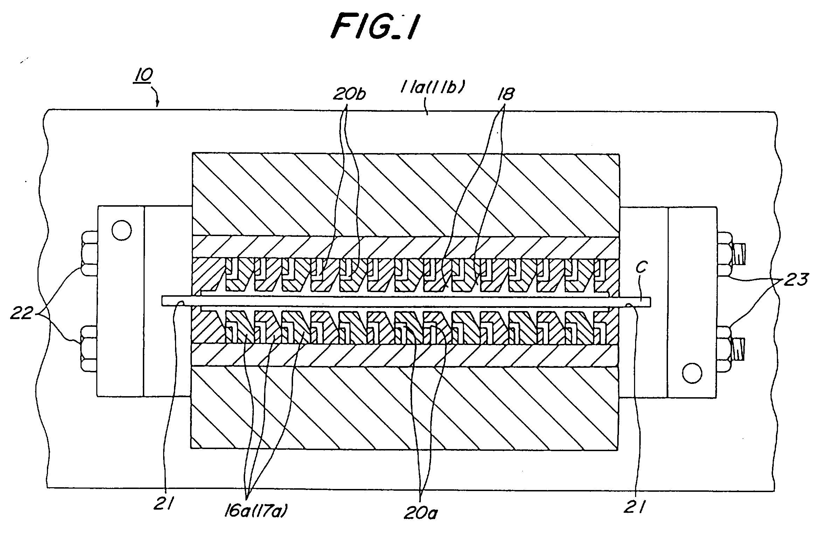

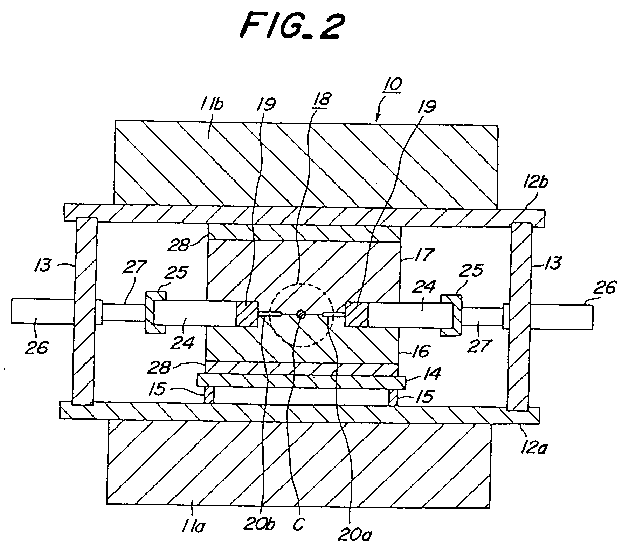

Referring now to Figs. 1 and 2, there is shown an apparatus according to one embodiment of the present invention, which is in the form of a transfer molding machine 10. The molding machine 10 can be preferably used for embodying a method for manufacturing an elongate composite insulator by integrally molding an insulating polymeric material such as EPDM to form a sheath and sheds S on a core rod C composed, e.g., of fiber-reinforced plastics.

As shown in Fig. 2, the molding machine 10 includes a lower press head 11a as a movable platen and an upper press head 11b as a stationary platen, which are arranged one above the other. A driving mechanism, not shown, is provided for displacing the lower press head 11a toward or away from the upper press head 11b. A lower substrate 12a is attached to the top surface of the lower press head 11a, and an upper substrate 12b is attached to the bottom surface of the upper press head 11b. A pair of regulating plates 13 are fixedly secured to both sides of the lower substrate 12a, in order to constantly maintain a fixed distance between the substrates 12a and 12b in the closed state of the mold shown in Fig. 2. A supporting plate 14 is supported by a central portion of the lower substrate 12a through leg portions 15. A lower mold portion 16 is fixedly secured to the supporting plate 14, and an upper mold portion 17 is fixedly secured to the bottom surface of the upper substrate 12b.

The lower mold portion 16 and the upper mold portion 17 cooperate with each other to constitute a mold having a cavity which corresponds to the sheds S of the composite insulator. As shown in Fig. 2, a pair of pots 19 for accommodating an unvulcanized polymeric material therein are arranged on right and left sides along the mold parting plane, i.e., the joining plane of the lower mold portion 16 and the upper mold portion 17. Gates 20a and 20b are connected between the pots 19 and the cavity 18, for injecting the polymeric material within the pots 19 into the cavity 18. In this case, for example, the gates 20a and 20b may be disposed to open into the cavity 18 at a position corresponding to the rear surface of a shed S of the composite insulator.

Referring to Fig. 1, in order to support the axial end portions of the core rod C, there are provided supporting portions 21 in the end regions of the mold parting plane. Thus, with the core rod C set and supported within the mold, the sheath and sheds S can be injection-molded on the core rod C. As particularly shown in Fig. 2, the gates 20a and 20b are arranged opposite to each other in the regions corresponding to each shed S in the cavity 18. Thus, during the injection of the polymeric material into the cavity 18, the injection pressure acts from both sides along the radial direction which is perpendicular to the center axis of the core rod C in the mold parting plane.

In the embodiment shown in Fig. 1, the lower mold portion 16 and the upper mold portion 17 forming the mold are composed of respective groups of blocks 16a and 17a which are divided in the longitudinal direction. These blocks 16a and 17a are integrally connected to each other by inserting elongate bolts 22 from one end and fastening nuts 23 to the bolts 22 at the other end. Such an arrangement serves to realize a mold having a relatively simplified structure. Furthermore, the mold can be readily modified in accordance with the variations in the design length of the composite insulator, simply by increasing or decreasing the number of the blocks 16a and 17a.

In order to enable the injection from the gates 20a and 20b into the cavity 18 by applying a pressure to the unvulcanized polymeric material within the pots 19, plungers 24 are arranged in the pots 19. To the rear end portion of each plunger 24 is connected a piston 27 of a hydraulic cylinder 26 through a connector 25. That is to say, each plunger 24 is pushed into the respective pot 19 when the hydraulic cylinder 26 is operated to advance the piston 27 forwards, so that the pressure is applied to the polymeric material in each pot 19 to inject the material into the cavity 18. It should be noted that these components are omitted in Fig. 1 for the sake of simplicity. For maintaining the mold at a predetermined temperature during the molding process, the mold is provided with heating plates 28 on the upper and lower sides, in a manner which is conventional to an ordinary transfer molding machine.

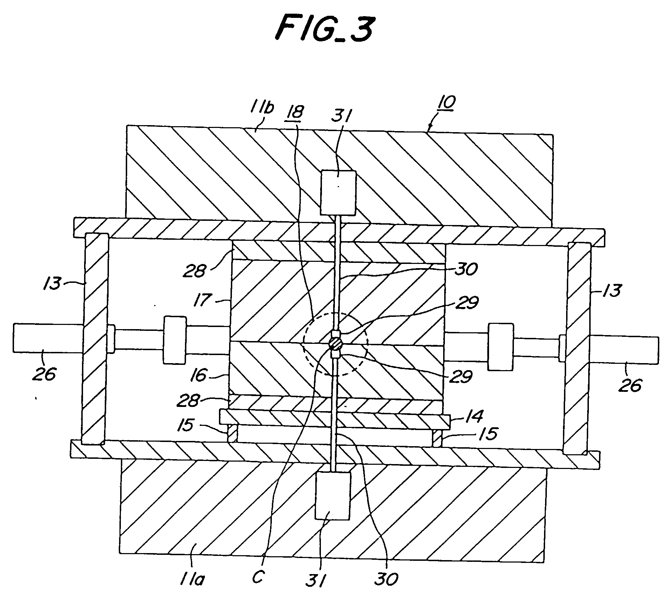

According to the present invention, when injecting the polymeric material from the gates 20a and 20b into the cavity 18, the core rod C can be supported from the radial direction perpendicular to the mold parting plane such that the injection pressure acts in the radial direction perpendicular to the center axis of the core rod C in the mold parting plane. To this end, as shown in Fig. 3, a pair of supporting members 29 which support the core rod C between the two adjacent sheds S from the radial direction are provided, which are arranged opposite to each other at least in a projection plane when observed in the axial direction. These supporting members 29 may be arranged spaced from each other in the axial direction, if necessary. Each supporting member 29 is connected to a driving source 31 through a rod 30 so that it can be displaced in a direction perpendicular to the mold parting plane, between an initial position in which the supporting member 29 is spaced from the the core rod C, and an operative position in which the supporting member 29 is maintained in contact with the the core rod C. The driving source 31 may be composed of a hydraulic cylinder, a pneumatic cylinder or a servomotor, which is arranged at an appropriate location of the molding machine 10. In this instance, it is possible to employ a structure wherein the driving source 31 is operated to displace the supporting member 29 from the initial position to the operative position, and the supporting member 29 is retracted or returned to the initial position under the action of a spring force.

An explanation will be made of a method for manufacturing the composite insulator by using the molding machine 10 with the above-described structure.

First of all, the core rod C is supported by the core supporting portions 21 in the opened state of the mold in which the lower mold portion 16 is spaced from the upper mold portion 17, and a predetermined amount of the unvulcanized polymeric material is filled in the pots 19. Subsequently, the lower press head 11a is displaced upwards or lifted toward the upper press head 11b to urge the lower mold portion 16 against the upper mold portion 17, and the mold locking is carried out in a manner known, per se. The driving sources 31 are then operated to displace the supporting members 29 from the initial position into the operative position in which they are brought into contact with the core rod C at locations between the adjacent sheds S, as particularly shown in Fig. 3, so that the core rod C is supported from the radial direction perpendicular to the mold parting plane. Also, the mold is maintained at a predetermined temperature by the heating plates 28 on the upper and lower sides of the mold. Referring to Fig. 2, when the hydraulic cylinders 26 are subsequently operated, the pistons 27 are advanced radially inwards to displace the plungers 24 inwardly within the pots 19. As a result, the pressure is applied to the polymeric material within the pots 19 so that the polymeric material is injected into the cavity 18 through the gates 20a and 20b.

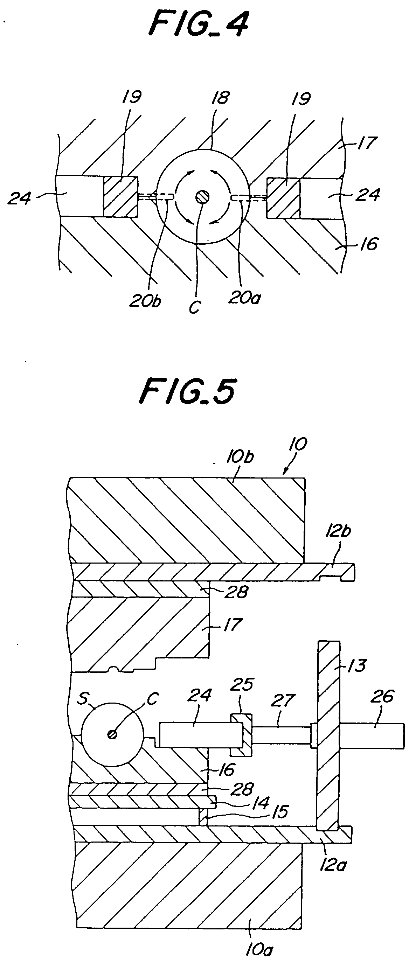

On such occasion, in the embodiment shown in Fig. 2, since a pair of gates 20a and 20b opening into the cavity 18 of a circular cross section are opposed to each other in the cross section of the cavity 18, the polymeric material is injected from the gates 20a and 20b into the cavity 18 in the directions opposite to each other, with the result that the pressure is substantially balanced as indicated by arrows in Fig. 4. Furthermore, the pressure of the polymeric material injected into the cavity 18 from the gates 20a and 20b is equally applied in the longitudinal direction of the core rod C. It is therefore possible to significantly mitigate the tendency that an unbalanced force due to the injection pressure of the polymeric material is applied to the core rod C within the cavity 18. Moreover, as explained above with reference to Fig 3, the supporting members 29 are in contact with the core rod C at locations between the adjacent sheds S, for supporting the core rod C from the radial direction perpendicular to the mold parting plane. It is therefore possible to positively and effectively suppress an undesired deflection of the core rod C which may otherwise be caused by the injection of the polymeric material into the cavity 18. The driving sources 31 of the supporting members 29 are inactivated upon completion of the injection of the polymeric material into the cavity 18, and the polymeric material is vulcanized with the supporting members 29 displaced radially outwards to the initial position in which they are spaced from the core rod C. In this way, the sheath and the sheds S are simultaneously and rapidly molded on the outer periphery of the core rod C.

After completion of vulcanization of the polymeric material, the lower press head 11a which had been maintained urged against the upper press head 11b is displaced downwards and the lower mold portion 16 is moved away from the upper mold portion 17 for opening the mold, as shown in Fig. 5. A desired composite insulator can now be obtained by removing the molded product from the cavity 18 of the lower mold portion 16.

Based on the composite insulator manufactured as above, it has been confirmed that the demand for an elongate molded product can be positively satisfied while maintaining a satisfactory product quality, especially the dimensional accuracy, due to the minimized deflection of the core rod during the injection of the polymeric material into the mold cavity. The following Table 1 shows the relationship among various injection and supporting conditions and the thickness of the sheath, when manufacturing a composite insulator of which the core rod is covered by a sheath having a nominal thickness of 5 mm, to clearly demonstrate the functional advantage of the supporting member for supporting the core rod from the radial direction perpendicular to the mold parting plane. In Table 1, the term "horizontal support" refers to a mode of supporting the core rod in the mold parting plane, while the term "vertical support" refers to the mode of supporting the core rod from the radial direction perpendicular to the mold parting plane. As can be appreciated from Table 1, the thickness of the sheath for covering the core rod is relatively uniformly maintained and the product quality in terms of the dimensional accuracy can be improved, particularly when the core rod is supported, during the injection of the polymeric material into the cavity, from the radial direction perpendicular to the mold parting plane in accordance with the present invention.

**Table 1**

| Injection condition | horizontal support | vertical support | maximum thickness | minimum thickness |
|---|---|---|---|---|
| one side | × | × | 9.0 mm | 1.0 mm |
| one side | ○ | × | 7.5 mm | 2.5 mm |
| one side | × | ○ | 8.0 mm | 2.0 mm |
| one side | ○ | ○ | 6.0 mm | 4.0 mm |
| both sides | ○ | × | 7.0 mm | 4.0 mm |
| both sides | ○ | ○ | 6.0 mm | 4.0 mm |

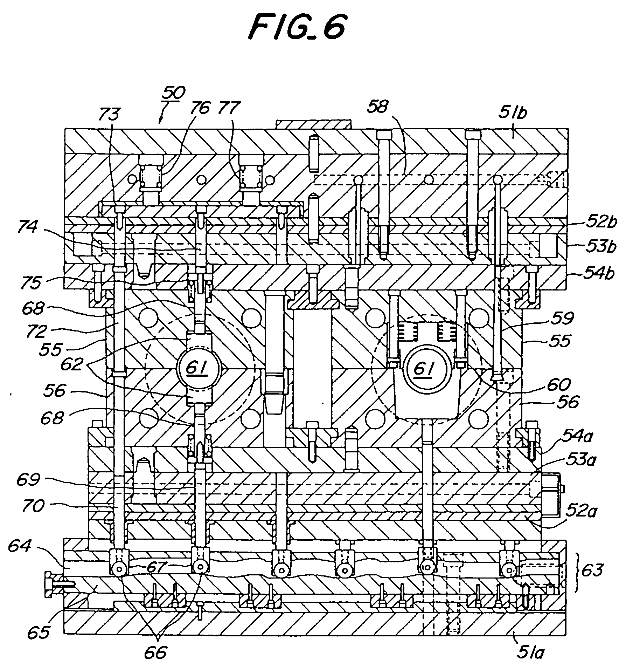

Fig. 6 shows a major part of an injection molding machine according to another embodiment of the present invention. This molding machine 50 includes a lower press head 51a and an upper press head 51b which are arranged one above the other. A lower mold portion 56 is secured to the upper side of the lower press head 51a through an insulating plate 52a, a heating plate 53a and a mounting plate 54a. An upper mold portion 57 is secured to the lower side of the upper press head 51b through a cold runner plate 55, an insulating plate 52b, a heating plate 53b and a mounting plate 54b. A cold runner 58 formed inside the cold runner plate 55 is connected to a gate 60 through a sprue 59 formed inside the upper mold portion 57. As in the previous embodiment, the gate 60 can be arranged such that the injection pressure acts on the core rod radially inwards, from both sides in the mold parting plane. In the embodiment shown in Fig.6, a pair of molds are provided for the molding machine 50 so as to enable a simultaneous manufacture of two composite insulators. Since the arrangement of such a molding machine is known, per se, the detailed description of the above-mentioned components will be omitted.

It should be noted that the left and right halves of Fig. 6 show the cross section of the mold at the different axial positions. That is, the left half of Fig. 6 shows the supporting members 62 arranged in the cross section of the mold corresponding to the location between adjacent sheds of the insulator, while the right half of Fig. 6 shows the spruce 59 arranged in the cross section of the mold corresponding to the location behind the shed of the insulator. The cold runner 58 and the gate 60 which are connected to the upstream and downstream sides of the sprue 59, respectively, are shown in the right half of Fig. 6 for the sake of convenience.

In the embodiment of Fig. 6, a pair of supporting members 62 are provided for each mold in the vertical direction so as to support the core rod within the mold cavity 61 from a direction perpendicular to the mold parting plane. These supporting members 62 can be driven by means of a common driving source 63, between an operative position in which the supporting members 62 are brought into contact with the core rod at a location between the adjacent sheds and an initial position in which the supporting members 62 are maintained spaced from the core rod.

More particularly, the common driving source 63 includes a cam member 65 which is provided for the lower press head 51a and formed with a cam groove 64 having an appropriate cam profile. Each supporting member 62 has a rod 68 which is connected to an associated cam follower 67 including a roller 66 which is arranged within and guided by the cam groove 64, through a transmission rod 69 in the case of the supporting member 62 for the lower mold 56 portion, and through a plurality of transmission rods 70, 71 and 72, a transmission member 73 having a substantially U-shaped cross section and a transmission rod 74 in the case of the supporting member 62 for the upper mold 57 portion. A first compression coil spring 75 is wound around the rod 68 of each supporting member 62, which generates a spring force urging the supporting member 62 toward the initial position. Second compression coil springs 76 and 77 are arranged between the upper press head 51b and the transmission member 73 which is included in a power transmission path to the supporting member 62 for the upper mold portion 57. The second compression coil springs 76 and 77 are designed to jointly generate a spring force which is greater than that of the first compression spring coil 75. Thus, when the joint spring force of the second compression coil springs 76 and 77 is applied to the supporting member 62 for the upper mold portion 57, the second compression coil springs 76 and 77 prevail the first compression coil spring 75 to displace the relevant supporting member 62 to the operative position in which it is brought into contact with the core rod.

The supporting members 62 for supporting the core rod within the cavity 61 from a direction perpendicular to the mold parting plane are shown in Fig. 6 as assuming the respective operative positions in which they are in contact with the core rod. In this instance, the supporting member 62 for the upper mold portion 57 is maintained at the operative position by an axial force which corresponds to the difference between the spring force of the second compression coil springs 76 and 77 and the spring force of the first compression coil spring 75. Furthermore, the supporting member 62 for the lower mold portion 56 is maintained in the operative position for supporting the core rod since it is lifted by the cam member 65 through the cam follower 67 and the rods 68 and 69, against the first compression coil spring 75.

According to the present embodiment also, the supporting members 62 are brought into contact with the core rod at locations between the adjacent sheds, to support the core rod from the radial direction perpendicular to the mold parting plane, as in the previous embodiment. It is therefore possible to positively suppress the undesired deflection of the core rod during injection of the polymeric material into the cavity 61. After completion of injection of the polymeric material into the cavity 61, when the cam member 65 as a driving source for the supporting members 62 is displaced toward left in Fig. 6, the supporting member 62 for the lower mold portion 65 is displaced downwardly to the initial position by the first compression coil spring 75. Also, the supporting member 62 for the upper mold portion 57 is displaced upwardly to the initial position by the first compression coil spring 75, because the transmission rods 70, 71 and 72 are lifted by the cam member 65 to forcibly compress the second compression coil springs 76 and 77.

The driving mechanism for the supporting members according to the embodiment illustrated in Fig. 6 is advantageous in that a sufficient operational speed and a highly improved operational reliability can be achieved even when the polymeric material to be molded is of a rapid vulcanization type.

It will be appreciated from the foregoing description that, according to the present invention, when the core rod is arranged within the metal mold cavity and the polymeric material is injected into the cavity from a gate which opens in a first radial direction perpendicular to the center axis of the core rod in the mold parting plane, the core rod is supported from a second radial direction perpendicular to the center axis of the core rod and also to the first radial direction so as to effectively minimize the deflection of the core rod within the cavity. The present invention thus provides an improved technology which is particularly suitable for manufacturing elongate molded products while maintaining a satisfactory product quality such as the dimensional accuracy.

The above-described embodiments were presented by way of examples only, and it is of course that various modifications and variations may be made without departing from the scope of the invention.

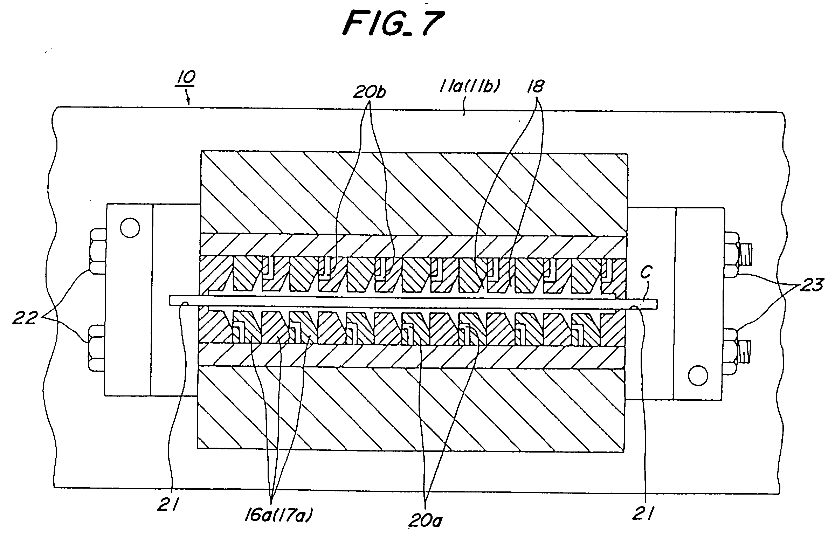

For example, the molding machine according to the embodiment shown in Fig. 1 may be modified such that the gates 20a and 20b are alternately provided for each shed S in a staggered manner, as shown in Fig. 7. In this instance, the core rod supporting members such as those disclosed, e.g., in JP-A-63-128916 may also be arranged in the radial direction opposite to the gates in the mold parting plane. Furthermore, the gates 20a and 20b may be disposed on only one side of the mold parting plane and combined with a pair of supporting members which are provided for the mold at angular positions of ±120° with reference to these gates. Finally, it is of course that the present invention can be directly applied to the manufacture of an elongate molded product other than the composite insulator.

## Claims

1. A method for manufacturing molded articles, wherein a core rod is arranged in a cavity of a mold and a polymeric material is injected into the cavity so that a molded portion having a predetermined shape is formed on an outer periphery of the core rod, said method comprising the steps of:
injecting the polymeric material from a gate into the cavity with an injection pressure which acts in a first radial direction which is perpendicular to a center axis of the core rod on a mold parting plane; and
suppressing a deflection of the core rod within the cavity during the injection of the polymeric material, by supporting the core rod from a second radial direction which is perpendicular to both the center axis of the core rod and the first radial direction, and curing the injected polymeric material within the cavity.

2. The method as set forth in Claim 1, wherein, during the injection of the polymeric material from said gate, the polymeric material is simultaneously injected into the cavity from another gate with an injection pressure which acts in a direction opposite to said first radial direction on the mold parting plane so as to substantially cancel the injection pressure acting on the core rod from said first radial direction.

3. The method as set forth in Claim 1, wherein said mold is provided with a supporting member having a supporting surface directed toward the second radial direction and adapted to be projected into the cavity, and wherein the core rod is supported from the second radial direction by the supporting member when the polymeric material is injected into the cavity.

4. The method as set forth in Claim 3, wherein said supporting member of the mold is movable between a first position in which the supporting member supports the core rod and a second position in which the supporting member is spaced from the core rod, and wherein the supporting member is maintained at the first position during the injection of the polymeric material and moved to the second position away from the core rod before completion of curing of the injected polymeric material.

5. A method for manufacturing elongate composite insulators, wherein an elongate core rod comprising a fiber-reinforced plastics is arranged in a cavity of a mold, and an insulating polymeric material is injected into the cavity to integrally form a sheath which covers an outer periphery of the core rod over substantially an entire length thereof and a plurality of sheds which are spaced from each other in an axial direction of the core rod, said method comprising the steps of:
injecting an unvulcanized polymeric material from a gate into the cavity with an injection pressure which acts in a first radial direction which is perpendicular to a center axis of the core rod on a mold parting plane; and
suppressing a deflection of the core rod within the cavity during the injection of the polymeric material, by supporting the core rod from a second radial direction which is perpendicular to both the center axis of the core rod and said first radial direction, and vulcanizing the injected polymeric material within the cavity.

6. The method as set forth in Claim 5, wherein, during the injection of the unvulcanized polymeric material from said gate, the unvulcanized polymeric material is simultaneously injected into the cavity from another gate with an injection pressure which acts in a direction opposite to said first radial direction on the mold parting plane so as to substantially cancel the injection pressure acting on the core rod from said first radial direction.

7. The method as set forth in Claim 5, wherein said mold is provided with a supporting member having a supporting surface directed toward the second radial direction and adapted to be projected into the cavity, and wherein the core rod is supported from the second radial direction by the supporting member when the polymeric material is injected into the cavity.

8. The method as set forth in Claim 7, wherein said supporting member of the mold is movable between a first position in which the supporting member supports the core rod and a second position in which the supporting member is spaced from the core rod, and wherein the supporting member is maintained at the first position during the injection of the polymeric material and moved to the second position away from the core rod before completion of vulcanization of the injected polymeric material.

9. An apparatus for manufacturing molded articles, wherein a core rod is arranged in a cavity of a mold and a polymeric material is injected into the cavity so that a molded portion having a predetermined shape is formed on an outer periphery of the core rod, said apparatus comprising:
a gate from for injecting the polymeric material into the cavity with an injection pressure which acts in a first direction perpendicular to the center axis of the core rod on a mold parting plane; and
a suppression means for suppressing a deflection of the core rod within the cavity during the injection of the polymeric material, said suppression means including a support means for supporting the core rod from a second radial direction perpendicular to both the center axis of the core rod and the first radial direction.

10. The apparatus as set forth in Claim 9, further comprising another gate for simultaneously injecting the polymeric material into the cavity with an injection pressure which acts in a direction opposite to said first radial direction on the mold parting plane so as to substantially cancel the injection pressure acting on the core rod from said first radial direction.

11. The apparatus as set forth in Claim 9 or 10, wherein said mold is provided with a supporting member having a supporting surface directed toward the second radial direction and adapted to be projected into the cavity so that the core rod is supported from the second radial direction by the supporting member when the polymeric material is injected into the cavity.

12. The apparatus as set forth in Claim 11, wherein said supporting member of the mold is movable between a first position in which the supporting member supports the core rod and a second position in which the supporting member is spaced from the core rod, so that the supporting member is maintained at the first position during the injection of the polymeric material and moved to the second position away from the core rod before completion of curing of the injected polymeric material.
